(19) Europäisches Patentamt / European Patent Office / Office européen des brevets

(11) **EP 3 473 885 A1**

(12) **EUROPEAN PATENT APPLICATION**
published in accordance with Art. 153(4) EPC

(43) Date of publication:
**24.04.2019 Bulletin 2019/17**

(51) Int Cl.:
*F16F 9/30* (2006.01)     *F16F 7/01* (2006.01)

(21) Application number: **17814937.3**

(22) Date of filing: **28.02.2017**

(86) International application number:
**PCT/JP2017/007686**

(87) International publication number:
**WO 2017/221465 (28.12.2017 Gazette 2017/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **21.06.2016 JP 2016122377**

(71) Applicants:
• **KYB Corporation**
  **Tokyo 105-6111 (JP)**
• **Nagoya Institute Of Technology**
  **Nagoya-shi, Aichi 466-8555 (JP)**

(72) Inventors:
• **SEKINE, Shinichi**
  **Tokyo 105-6111 (JP)**
• **NAKAZATO, Masakazu**
  **Tokyo 105-6111 (JP)**
• **TOYOUCHI, Atsushi**
  **Tokyo 105-6111 (JP)**
• **FUKUZAWA, Yuji**
  **Hanishina-gun**
  **Nagano 389-0688 (JP)**
• **IDO, Yasushi**
  **Nagoya-shi**
  **Aichi 466-8555 (JP)**

(74) Representative: **Müller-Boré & Partner**
  **Patentanwälte PartG mbB**
  **Friedenheimer Brücke 21**
  **80639 München (DE)**

(54) **DAMPER**

(57) Provided is a damper that exerts a damping force with a simple structure using elastically deformable granular bodies.

The damper includes a cylinder (10), a piston (30), a rod (50), a rod guide (70), and a plurality of granular bodies (90). The piston (30) is housed in the cylinder (10) and reciprocates in the central axis direction of the cylinder (10). The rod (50) is connected to the piston (30). The rod (50) extends in the central axis direction of the cylinder (10) and protrudes to an outside from an open end (11) side of the cylinder (10). The rod guide (70) is fixed to the open end (11) of the cylinder (10). The rod guide (70) has a through hole (70A) which penetrates in the central axis direction of the cylinder (10) and through which the rod (50) is reciprocably inserted. The granular bodies (90) are elastic bodies each having a spherical shape. The granular bodies (90) are filled in the cylinder (10).

Fig. 1

EP 3 473 885 A1

**Description**

TECHNICAL FIELD

The present invention relates to a damper.

BACKGROUND ART

Patent Literature 1 discloses a conventional damper. The damper includes a cylinder, a piston, a pair of rods, a pair of rod guides, a pair of compression coil springs, and a plurality of granular bodies. The cylinder has a cylindrical shape, and has openings at both ends. The piston has a central portion and both end portions. The central portion of the piston has a columnar shape and has an outer diameter smaller than an inner diameter of the cylinder. The piston is housed in the cylinder with a clearance left between the central portion of the piston and an inner peripheral surface of the cylinder. Each of the end portions of the piston has a truncated cone shape an outer diameter of which gradually decreases toward the outside with the end surface of the central portion serving as a bottom surface. The piston is housed in the cylinder and reciprocates in a central axis direction of the cylinder. The paired rods are continuous with the end portions of the piston respectively and extend in both opposite directions from the piston on a central axis of the piston. These rods are disposed on the central axis of the cylinder. The paired rod guides are disposed inside relative to the end portions of the cylinder and movable outward from the disposed positions. The rods are inserted through the respective rod guides and extend outward from both ends of the cylinder. The paired compression coil springs are respectively disposed on both end portions of the cylinder and outside the rod guides. These compression coil springs apply to the rod guides an elastic force in a central direction of the cylinder. The granular bodies are filled in a space between the rod guides inside the cylinder. The granular bodies are movable through a clearance between the inner peripheral surface of the cylinder and the piston.

When a force that moves the piston of the damper in one direction works on the piston via the rod, the force is further applied via the granular bodies to the rod guide located at a direction in which the piston is about to move. When this force exceeds the elastic force of the compression coil spring applied to the rod guide, the rod guide moves to the outside (toward the end portion of the cylinder). As a result, a volume of the space filled with the granular bodies increases, so that the fluidity of the granular bodies in the cylinder is promoted, and the piston moves while pushing the granular bodies, whereby the damper can exert a damping force. In this manner, the damper can produce a stable damping force not affected by the mounting posture.

CITATION LIST

PATENT LITERATURE

Patent Literature 1: JP 2011-21648 A

SUMMARY OF INVENTION

TECHNICAL PROBLEMS

According to the damper disclosed in Patent Literature 1, however, the damping force is exerted in accordance with promotion of the fluidity of the granular bodies in the cylinder and movement of the piston pushing the granular bodies. It is therefore necessary to provide a structure in which the volume of the space filled with the granular bodies is increased in accordance with movement of the piston.

The present invention has been developed in consideration of the aforementioned conventional circumstances. An object to be achieved by the present invention is to provide a damper that exerts a damping force with a simple structure using elastically deformable granular bodies.

SOLUTIONS TO PROBLEMS

A damper according to the present invention includes a cylinder, a piston, a rod, a rod guide, and a plurality of granular bodies. At least one end of the cylinder is open. The piston is housed in the cylinder and reciprocates in a central axis direction of the cylinder. The rod is connected to the piston. The rod extends in the central axis direction of the cylinder and protrudes to an outside from an open end side of the cylinder. The rod guide is fixed to the open end of the cylinder. The rod guide has a through hole which penetrates in the central axis direction of the cylinder and through which the rod is reciprocably inserted. The granular bodies are elastic bodies each having a spherical shape. The granular bodies are filled in the cylinder.

Each of the granular bodies of the damper according to the present invention may contain fine particles.

The cylinder of the damper according to the present invention may be bottomed having an open end opened at one end of the cylinder and a closed end closed at the other end of the cylinder. The piston of the damper according to the present invention may divide an interior of the cylinder into a first chamber on the open end side and a second chamber on the closed end side. The filling rate of the granular bodies in the first chamber may be smaller than the filling rate of the granular bodies in the second chamber.

The filling rate is herein expressed by following Equation (1) (the same is applicable hereinafter). A filling volume is a volume of a space filled with the granular bodies.

[Equation 1]

$$\text{Filling rate} = \frac{\text{Mass of granular bodies}}{\text{Filling volume} \times \text{Density of granular bodies}} \cdots (1)$$

In the damper of the present invention, a clearance may be formed between the piston and an inner peripheral surface of the cylinder. Furthermore, in the damper of the present invention, the granular bodies may move through the clearance when the piston reciprocates in the central axis direction of the cylinder.

BRIEF DESCRIPTION OF THE DRAWINGS

Fig. 1 is a cross-sectional view showing a damper of a first embodiment.

Fig. 2 is a graph showing a relationship (static characteristic) between a stroke displacement amount and a reaction force according to a difference in a filling rate of granular bodies in the damper of the first embodiment.

Fig. 3 is a graph showing a relationship (static characteristic) between a stroke displacement amount and a reaction force according to a difference in particle size and hardness of the granular bodies in the damper of the first embodiment.

Fig. 4 is a graph showing a relationship (dynamic characteristic) between a stroke displacement amount and a damping force when the damper of the first embodiment is vibrated at an excitation speed of 0.05 m/s (8 Hz) and an amplitude of ± 1 mm.

Fig. 5 is a graph showing a relationship (static characteristic) between a stroke displacement amount and a reaction force according to a difference in hardness and a filling rate of the granular bodies in the damper of the first embodiment.

Fig. 6 is a graph showing a relationship (static characteristic) between a stroke displacement amount and a reaction force according to a difference in a filling rate of the granular bodies having durometer type A hardness of 60° in the damper of the first embodiment.

Fig. 7 is a graph showing a relationship (static characteristic) between a stroke displacement amount and a reaction force according to a difference in a filling rate of the granular bodies having durometer type A hardness of 40° in the damper of the first embodiment.

Fig. 8 is a cross-sectional view showing a damper of a second embodiment.

Figs. 9 are graphs each showing a relationship between a stroke displacement amount and a damping force when an excitation experiment is performed for the damper of the second embodiment, wherein: (A) shows a case where the excitation experiment is performed with a balancing center serving as a center; and (B) shows a case where the excitation experiment is performed with a geometric center serving as a center.

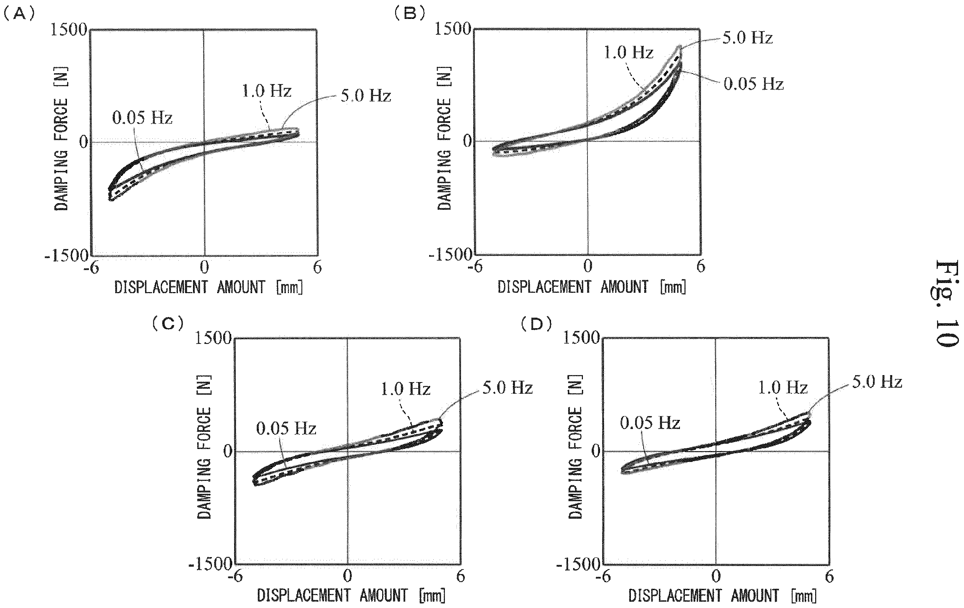

Figs. 10 are graphs each showing a relationship between a stroke displacement amount and a damping force when an excitation experiment is performed for the damper of the second embodiment, wherein: (A) shows a case where a filling rate of the granular bodies in a first chamber is 60% and a filling rate of the granular bodies in a second chamber is 80%; (B) shows a case where a filling rate of the granular bodies in the first chamber is 80% and a filling rate of the granular bodies in the second chamber is 60%; (C) shows a case where a filling rate of the granular bodies in the first chamber is 66.8% and a filling rate of the granular bodies in the second chamber is 73.6%; and (D) shows a case where a filling rate of the granular bodies in the first chamber is 70% and a filling rate of the granular bodies in the second chamber is 70%.

Fig. 11 is a cross-sectional view showing a damper of a third embodiment.

Fig. 12 is a schematic diagram of a granular body to be filled in a cylinder of the damper of the third embodiment.

Fig. 13 is a graph showing a relationship between a stroke displacement amount and a damping force when an excitation experiment is performed for the damper of the third embodiment with four types of the granular bodies filled respectively in the cylinder.

Fig. 14 is a graph showing a relationship between a stroke displacement amount and a damping force when an excitation experiment is performed for the damper of the third embodiment while changing a volume ratio of the fine particles to the granular bodies.

Figs. 15 are graphs each showing a relationship between a stroke displacement amount and a damping force when an excitation experiment is performed for the damper of the third embodiment while changing a filling rate of the granular bodies with an installation angle of 0° and 60°.

DESCRIPTION OF EMBODIMENTS

First through third embodiments each embodying a damper of the present invention will be described with reference to the drawings.

<First Embodiment>

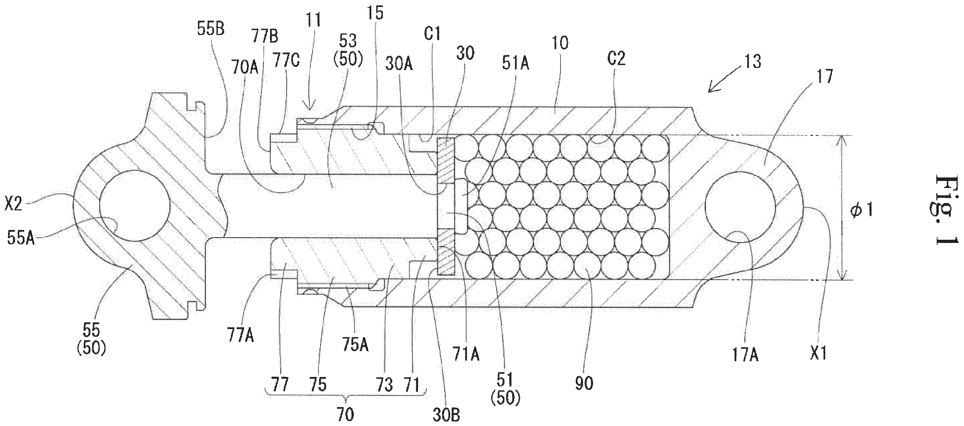

As shown in Fig. 1, a damper of the first embodiment includes a cylinder 10, a piston 30, a rod 50, a rod guide 70, and a plurality of granular bodies 90.

The cylinder 10 is bottomed, and has an open end 11 at one end of the cylinder and a closed end 13 at the other end of the cylinder. An inner peripheral surface of the opening end 11 is threaded to be formed into a female threaded portion 15. An inner diameter $\varphi 1$ of the cylinder 10 on an inner side with respect to the female threaded portion 15 is constant and slightly smaller than an inner diameter of the female threaded portion 15. The inner diameter $\varphi 1$ of the cylinder 10 on the inner side with respect to the female threaded portion 15 is 16 mm. The closed end 13A has a top portion X1 extending in one direction perpendicular to the central axis of the cylinder 10 and has a cylinder side attachment portion 17 having a mountain shape such that a surface around the top portion X1 protrudes in a substantially cylindrical shape. The cylinder side attachment portion 17 is provided with a cylinder side attachment hole 17A penetrating in a direction in which the top portion X1 extends. When the damper is to be mounted on an object, an attachment pin (not shown) is inserted into the cylinder side attachment hole 17A.

The piston 30 is a disk-shaped flat plate. A connection hole 30A penetrates through a center of the piston 30. An outer diameter of the piston 30 is 15.1 mm, which is smaller than the inner diameter $\varphi 1$ (16 mm) of the cylinder 10. A thickness of the piston 30 is 2 mm. The piston 30 divides an interior of the cylinder 10 into a first chamber C 1 on the opening end 11 side and a second chamber C 2 on the closed end 13 side. The piston 30 reciprocates in the central axis direction of the cylinder 10.

The rod 50 has a connection portion 51 which is a distal end portion, an intermediate portion 53, and a rod side attachment portion 55 which is a rear end portion. The connection portion 51 and the intermediate portion 53 have columnar shapes and are formed continuously and coaxially with each other. An outer diameter of the connection portion 51 is substantially the same as an inner diameter of the connection hole 30A of the piston 30. An outer diameter of the intermediate portion 53 is larger than the inner diameter of the connection hole 30A of the piston 30. The connection portion 51 of the rod 50 is inserted into the connection hole 30A of the piston 30 and a distal end 51A of the connection portion 51 protruding from the piston 30 is compressed and crushed, whereby the piston 30 is connected with the rod 50 in a retaining state. The rod side attachment portion 55 protrudes to the outside from the opening end 11 side of the cylinder 10. The rod side attachment portion 55 on the intermediate portion 53 side has a substantially disk shape having an outer diameter larger than an outer diameter of the intermediate portion 53. The rear side of the rod side attachment portion 55 has a top portion X2 extending in one direction perpendicular to the central axis of the rod 50. A surface around the top portion X2 has a mountain shape protruding in a substantially cylindrical shape. The rod side attachment portion 55 has a rod side attachment hole 55A penetrating in a direction in which the top portion X2 extends. When the damper is to be mounted on the object, an attachment pin (not shown) is inserted into the rod side attachment hole 55A.

The rod guide 70 has a through hole 70A penetrating the central axis of the rod guide 70 and having an inner diameter slightly larger than an outer diameter of the intermediate portion 53 of the rod 50. In a state where the rod guide 70 is fixed to the open end 11 of the cylinder 10, the through hole 70A penetrates in the central axis direction of the cylinder. The rod 50 is inserted into the through hole 70A of the rod guide 70 so as to be reciprocable. The rod guide 70 has a first insertion portion 71, a second insertion portion 73, a male threaded portion 75, and a fastening portion 77.

The first insertion portion 71 has a cylindrical shape. An outer diameter of the first insertion portion 71 is smaller than the outer diameter of the piston 30. Since the outer diameter of the first insertion portion 71 is smaller than the outer diameter of the piston 30, a distal end surface 71A of the first insertion portion 71 does not make close contact with a whole of an end surface 30B of the piston 30 (the end surface on the side of the open end 11 of cylinder 10). Accordingly, the piston 30 can smoothly move in a direction toward the closed end 13 from an abutment state against the distal end surface 71A of the first insertion portion 71 of the rod guide 70.

The second insertion portion 73 also has a cylindrical shape. The second insertion portion 73 is continuously formed from a rear end of the first insertion portion 71. An outer diameter of the second insertion portion 73 is larger than an outer diameter of the first insertion portion 71, and substantially equal to the inner diameter φ1 of the cylinder 10 on the inner side than the female threaded portion 15.

The male threaded portion 75 also has a cylindrical shape. The male threaded portion 75 is continuously formed from a rear end of the second insertion portion 73. An outer diameter of the male threaded portion 75 is slightly larger than the outer diameter of the second insertion portion 73. An outer peripheral surface of the male threaded portion 75 is threaded. The male threaded portion 75 is screwed into the female threaded portion 15 of the cylinder 10 while being adjusted in a degree of screwing. That is, the rod guide 70 is fixed to the open end 11 of the cylinder 10.

The fastening portion 77 also has a cylindrical shape. The fastening portion 77 is continuously formed from a rear end of the male threaded portion 75. An outer diameter of the fastening portion 77 is smaller than the outer diameter of the male threaded portion 75. The fastening portion 77 has recesses 77A formed at two symmetrical positions with respect to the central axis thereof. The recesses 77A are each open to a rear end surface 77B and an outer peripheral surface 77C of the fastening portion 77. At the time of inserting the first insertion portion 71 and the second insertion portion 73 of the rod guide 70 into the cylinder 10 and screwing the male threaded portion 75 into the female threaded portion 15 of the cylinder 10, a tip end of a rotary tool is engaged with the recesses 77A.

The granular bodies 90 are elastic bodies and filled in the second chamber C2 only. Each of the granular bodies 90 has a spherical shape. A maximum stroke length of the damper is set to 7 mm. In other words, when the damper is contracted by 7 mm from a maximum extended state, an end surface 55B of the rod side attachment portion 55 of the rod 50 located on the intermediate portion 53 side collides with the rear end surface 77B of the fastening portion 77 of the rod guide 70.

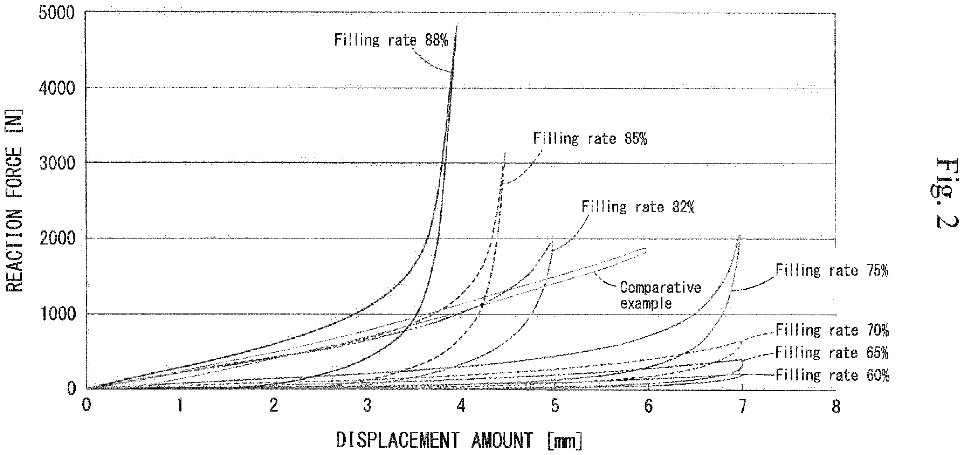

Fig. 2 is a graph showing a relationship (static characteristics) between a stroke displacement amount and a reaction force according to a difference in a filling rate when the granular bodies 90 made of nitrile rubber having a particle size of 3 mm and a durometer type A hardness of 80° are filled in the second chamber C2 only.

The filling rate of the granular bodies 90 was changed in a range from 60% to 88% in 7 levels (60%, 65%, 70%, 75%, 82%, 85%, 88%). Fig. 2 also shows a relationship (static characteristic) between stroke displacement and a reaction force of an oil damper, as a comparative example, which includes the cylinder 10, piston 30, rod 50, and rod guide 70 having the same shapes and sizes as those of the first embodiment and encloses a silicone oil in the cylinder 10.

In Fig. 2, an area surrounded by each of the graphs corresponds to a magnitude of the damping force. As can be seen from the figure, the damper in which the granular bodies 90 made of nitrile rubber and having a particle size of 3 mm and durometer type A hardness of 80° are filled in only the second chamber C2 at a filling rate ranging from 60% to 88% generates a damping force equal to or greater than the damping force of the oil damper shown as the comparative example.

Furthermore, the reaction force of the damper is higher as the filling rate of the granular bodies 90 is higher. Accordingly, the characteristics of the damper, such as the reaction force and damping force, can be easily adjusted only by changing the filling rate of the granular bodies 90. Furthermore, the damper exhibits a higher reaction force during contracting operation than during extending operation at each stroke displacement amount.

In addition, the reaction force rapidly rises in the damper in which the filling rate of the granular bodies 90 ranges from 75% to 88%. This indicates the state where void spaces in the second chamber C2 almost disappear (a filling rate becomes approximately 100%) at a stroke displacement amount when the reaction force becomes maximum so that further stroke is no longer allowed. Therefore, though the maximum stroke of the damper is set to 7 mm, the stroke allowable range becomes shorter than 7 mm by filling the granular bodies 90 at 75% or more. Thus, when the granular bodies 90 of the damper are filled at 75% or more, collision can be avoided during contracting operation between the end surface 55B of the rod side attachment portion 55 of the rod 50 on the intermediate portion 53 side and the rear end surface 77B of the fastening portion 77 of the rod guide 70. In this way, since breakage of the damper caused by collision is prevented, it is not necessary to provide in the damper a cushioning material, such as rubber, between the end face 55B of the rod side attachment portion 55 of the rod 50 on the intermediate portion 53 side and the rear end surface 77B of the fastening portion 77 of the rod guide 70.

Furthermore, as shown in the respective graphs, a change in the reaction force during contracting operation and a change in the reaction force during extending operation in the damper are substantially constant every time. This is because the granular bodies 90 each have a spherical shape and therefore a force is applied uniformly to the granular bodies 90 filled in the second chamber C2 during contracting operation. That is, the void spaces in the second chamber C2 filled with the granular bodies 90 are always changed uniformly during contracting operation, with the result that characteristics of the damper such as reaction force and damping force during contracting operation and extending operation are substantially constant every time.

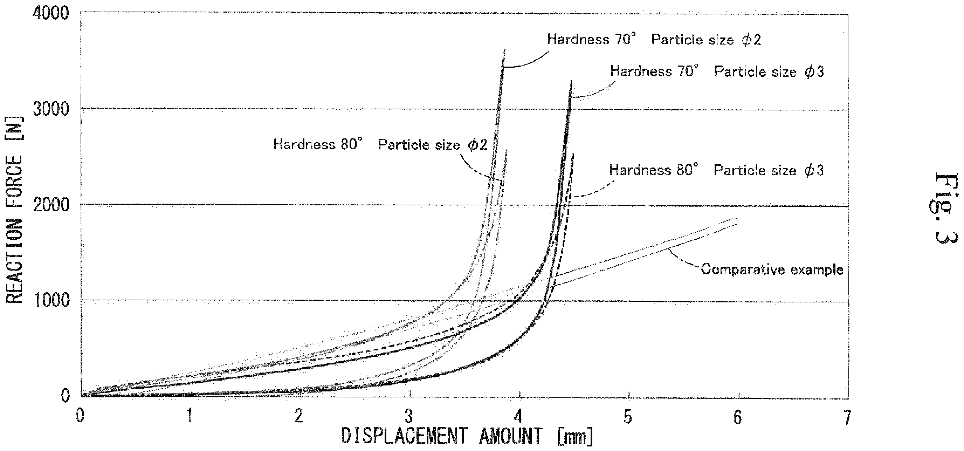

Next, Fig. 3 shows a relationship (static characteristics) between a stroke displacement amount and a reaction force according to a difference in hardness and particle size of the granular bodies 90 made of nitrile rubber when the granular bodies 90 are filled in only the second chamber C2 at 85%.

The hardness of the granular bodies 90 was changed in two stages of durometer type A hardness of 70° and 80°, while the particle size of the granular bodies 90 was changed in two stages of 2 mm and 3 mm. Fig. 3 also shows a relationship (static characteristic) between a stroke displacement amount and a reaction force of an oil damper, as a comparative example, which includes the cylinder 10, piston 30, rod 50, and rod guide 70 having the same shapes and sizes as those of the first embodiment and encloses a silicone oil in the cylinder 10.

It is understood that as the particle size of the granular bodies 90 is smaller, a reaction force is higher and a sharp rise of the reaction force appears with a shorter stroke in this damper. This is because when the damper contracts, the void spaces in the second chamber C2 are decreased with elastic deformation of the granular bodies 90 filled in the second chamber C2, and as the particle size is smaller, almost all the void spaces in the second chamber C2 disappear (a filling rate becomes approximately 100%) with a shorter stroke. In this damper, a change of the characteristics due to the difference in hardness of the granular bodies 90 is small.

In Fig. 3, an area surrounded by each of the graphs corresponds to a magnitude of the damping force. As can be seen from the figure, the dampers in which the granular bodies 90 made of nitrile rubber having durometer type A hardness of 70° and a particle size of 2 mm or 3 mm, and the granular bodies 90 made of nitrile rubber having durometer type A hardness of 80° and a particle size of 2 mm or 3 mm are respectively filled in only the second chamber C2 at a filling rate of 85%, generate a damping force equal to or greater than the damping force of the oil damper shown as the comparative example.

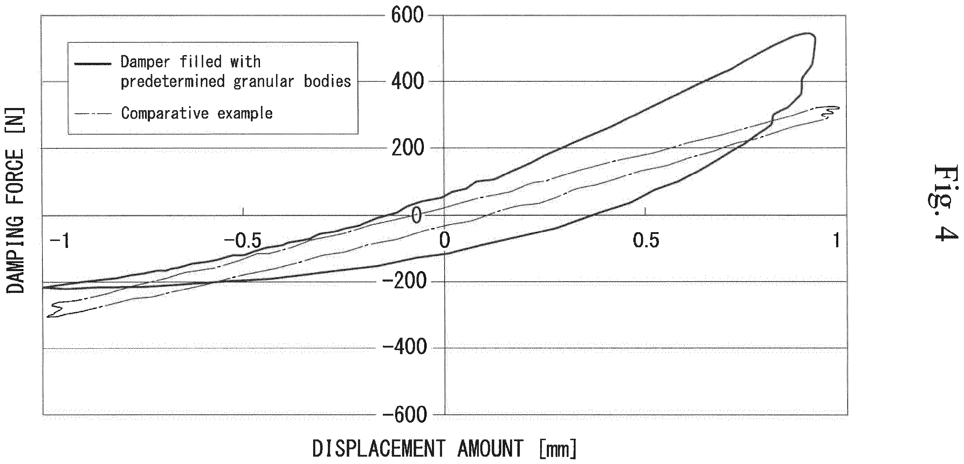

Next, Fig. 4 shows a relationship (dynamic characteristic) between a stroke displacement amount and a damping force when a damper in which the granular bodies 90 made of nitrile rubber each having a particle size of 3 mm and a durometer type A hardness of 80° are filled in only the second chamber C2 at a filling rate of 85% is vibrated at an excitation speed of 0.05 m/s (8 Hz) and an amplitude $\pm 1$ mm. Fig. 4 also shows a relationship (dynamic characteristic) between a stroke displacement amount and a damping force when the oil damper, which includes the cylinder 10, piston 30, rod 50, and rod guide 70 having the same shapes and sizes as those of the first embodiment and encloses a silicone oil in the cylinder 10, is vibrated under the same conditions, as a comparative example.

In Fig. 4, an area surrounded by each of the graphs indicates damping energy. The area of the graph of the damper in which the granular bodies 90 made of nitrile rubber having a particle size of 3 mm and a durometer type A hardness of 80° are filled in only the second chamber C2 at a filling rate of 85%, is larger than the area of the graph of the oil damper shown as the comparative example. In fact, damping energy of the damper in which the granular bodies 90 configured as the above are filled is 286.1 mJ, which is larger than 93.8 mJ that is the damping energy of the oil damper of the comparative example.

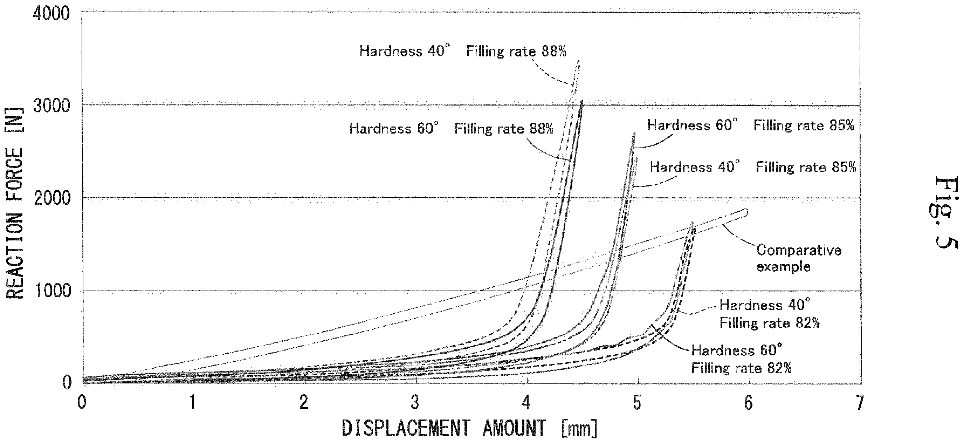

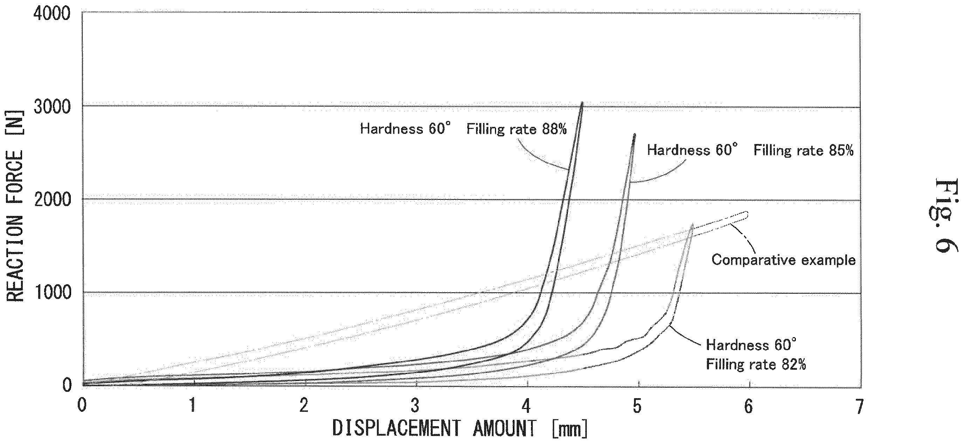

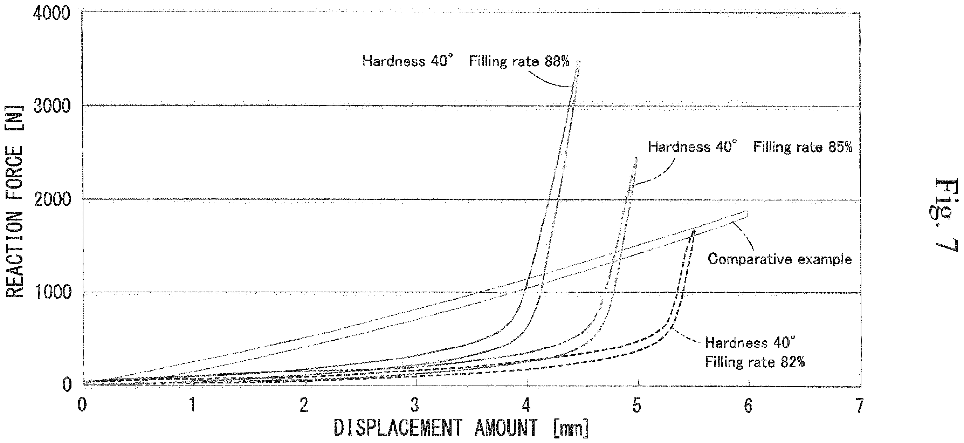

Next, Fig. 5 shows a relationship (static characteristics) between a stroke displacement amount and a reaction force according to a difference in hardness and a filling rate of the granular bodies 90 when the granular bodies 90 made of silicone rubber having a particle size of 3 mm are filled in the second chamber C2 only. Fig. 6 selects from Fig. 5 the graphs concerning a durometer type A hardness of 60° and shows a relationship (static characteristic) between stroke displacement and a reaction force according to a difference in a filling rate. Fig. 7 selects from Fig. 5 the graphs concerning a durometer type A hardness of 40° and shows a relationship (static characteristic) between stroke displacement and a reaction force according to a difference in a filling rate.

The hardness of the granular bodies 90 was changed between two stages of durometer type A hardness of 40° and 60°, while the filling rate of the granular bodies 90 was changed between 82%, 85%, and 88%. In addition, Figs. 5 to 7 each show a relationship (static characteristic) between stroke displacement and a reaction force of an oil damper, as a comparative example, which includes the cylinder 10, piston 30, rod 50, and rod guide 70 having the same shapes and sizes as those of the first embodiment and encloses a silicone oil in the cylinder 10.

In Figs. 5 to 7, an area surrounded by each of the graphs corresponds to the magnitude of the damping force. As can be seen from the figure, the damper in which the granular bodies 90 made of silicone rubber having a particle size of 3 mm and durometer type A hardness of 40° or 60° are filled in only the second chamber C2 at the respective filling rates of 82%, 85%, and 88% generates a damping force substantially equal to the damping force of the oil damper shown as the comparative example. In this damper, a change of the characteristics due to the difference in hardness of the granular bodies 90 is small.

The reaction force of the damper is higher as the filling rate of the granular bodies 90 is higher. Accordingly, the characteristics of the damper, such as the reaction force and damping force, can be easily adjusted only by changing the filling rate of the granular bodies 90. Furthermore, the damper exhibits a higher reaction force during contracting operation than during extending operation at each stroke displacement amount.

In addition, the reaction force rapidly rises in the damper in which the filling rate of the granular bodies 90 is 82%, 85% and 88%. This indicates the state where void spaces in the second chamber C2 almost disappear (a filling rate becomes approximately 100%) at a stroke displacement amount when the reaction force becomes maximum so that further stroke is no longer allowed. Therefore, though the maximum stroke of the damper is set to 7 mm, the stroke allowable range becomes 6 mm or shorter by filling the granular bodies 90 at 82% or more. Thus, when the granular bodies 90 of the damper are filled at 82% or more, collision can be avoided during contracting operation between the end surface 55B of the rod side attachment portion 55 of the rod 50 on the intermediate portion 53 side and the rear end surface 77B of the fastening portion 77 of the rod guide 70. In this way, it is not necessary to provide in the damper a cushioning material, such as rubber, between the end face 55B of the rod side attachment portion 55 of the rod 50 on the intermediate portion 53 side and the rear end surface 77B of the fastening portion 77 of the rod guide 70 in order to prevent breakage of the damper.

As described above, the damper of the first embodiment includes the cylinder 10, the piston 30, the rod 50, the rod guide 70, and the plurality of granular bodies 90. The cylinder 10 is bottomed, and has the open end 11 at one end of the cylinder and the closed end 13 at the other end of the cylinder. The piston 30 divides the interior of the cylinder 10 into the first chamber C1 on the open end 11 side and the second chamber C2 on the closed end 13 side, and reciprocates in the central axis direction of the cylinder 10. The rod 50 has the connection portion 51 and the rod side attachment portion 55. The connection portion 51 of the rod 50 is connected to the piston 30. The rod side attachment portion 55 of the rod 50 protrudes to the outside from the opening end 11 side. The rod guide 70 is fixed to the open end 11. The rod guide 70 has a through hole 70A which penetrates in the central axis direction of the cylinder 10 and through which the rod 50 is reciprocally inserted. The granular bodies 90 are elastic bodies. The granular bodies 90 are filled in only the second chamber C2 at a predetermined filling rate (60% to 88%).

In this damper, the granular bodies 90 filled in the second chamber C2 are elastically deformed and crushed during contracting operation. By a frictional force between the granular bodies 90 and a frictional force between molecules of granular bodies 90 generated at this time, the damper can exert a damping force.

Accordingly, the damper of the first embodiment can exert a damping force with a simple structure using elastically deformable granular bodies 90.

In addition, when the granular bodies 90 are elastically deformed and crushed by contracting operation of the damper, elastic force of each of the granular bodies 90 acts in a direction to extend the damper. Accordingly, it is not necessary to provide a spring for generating a reaction force in the damper.

In addition, each of the granular bodies 90 has a spherical shape in this damper. When the granular bodies 90 filled in the second chamber C2 are crushed during contracting operation of the damper, a force is uniformly applied to each of the granular bodies 90. Accordingly, the void spaces in the second chamber C2 filled with the granular bodies 90 are changed uniformly during extending and contracting operations, with the result that characteristics of the damper such as the damping force and the reaction force generated when the granular bodies 90 are crushed can be always substantially constant.

In addition, the granular bodies 90 are filled in the cylinder 10 in this damper instead of enclosing liquid such as silicone oil in the cylinder 10. Accordingly, the damper is free from leakage of liquid.

<Second Embodiment>

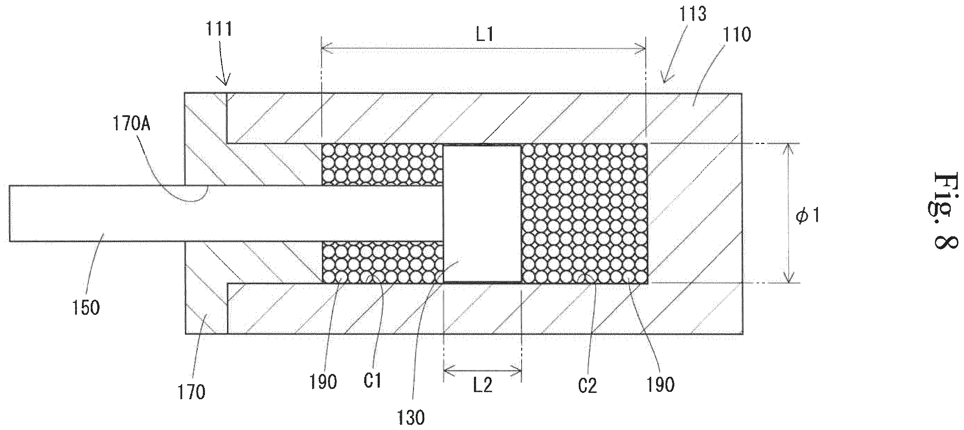

As shown in Fig. 8, a damper according to a second embodiment includes a cylinder 110, a piston 130, a rod 150, a rod guide 170, and a plurality of granular bodies 190 similarly to the damper of the first embodiment, but is different from the damper of the first embodiment in that the granular bodies 190 are filled in both of the first chamber C1 and the second chamber C2.

The cylinder 110 has a bottomed and cylindrical shape, and has an open end 111 at one end of the cylinder and a closed end 113 at the other end of the cylinder. The cylinder 110 has an inner diameter $\varphi 2$ of 35 mm. The piston 130 has a columnar shape with an outer diameter of 34 mm and a thickness L2 of 16 mm. The piston 130 divides an interior of the cylinder 110 into a first chamber C1 on the open end 111 side and a second chamber C2 on the closed end 113 side. The piston 130 reciprocates in the central axis direction of the cylinder 110.

The rod 150 has a columnar shape with an outer diameter of 14 mm. The rod 150 is connected to the piston 130, extends in the central axis direction of the cylinder 110, and protrudes to the outside from the open end 111 side of the cylinder 110. The rod guide 170 is fixed to the open end 111 of the cylinder 110. The rod guide 170 has a through hole 170A penetrating on the central axis thereof and having an inner diameter slightly larger than an outer diameter of the rod 150. The through hole 170A penetrates in the central axis direction of the cylinder 110 in a state where the rod guide 170 is fixed to the open end 111 of the cylinder 110. The rod 150 is reciprocally inserted into the through hole 170A of the rod guide 170. In this damper, a distance L1 between a bottom surface of the cylinder 110 and an inside surface of the rod guide 170 inserted and fixed in the cylinder 110 is 78 mm.

The granular bodies 190 are elastic bodies made of silicone rubber each having a particle size of 3 mm and a durometer type A hardness of 60°. In this damper, firstly, the granular bodies 190 are filled in the first chamber C1 and the second chamber C2 at a filling rate of 70% respectively in a state where the piston 130 is positioned at a center in the central axis direction of the cylinder 110 (hereinafter referred to as the "geometric center"). Then, an elastic force of the granular bodies 190 filled in the first chamber C 1 and the second chamber C2 is applied to the piston 130 from both sides, and in this condition, the damper is left until a load becomes statically balanced. The position at which the load applied to the piston 130 is statically balanced (hereinafter referred to as "balancing center") is a position where the piston 130 is moved by 1.5 mm from the geometric center toward the second chamber C2. In the state where the piston 130 is positioned at the balancing center, the filling rate of the granular bodies 190 in the first chamber C1 is 66.8%, while the filling rate of the granular bodies 190 in the second chamber C2 is 73.6%.

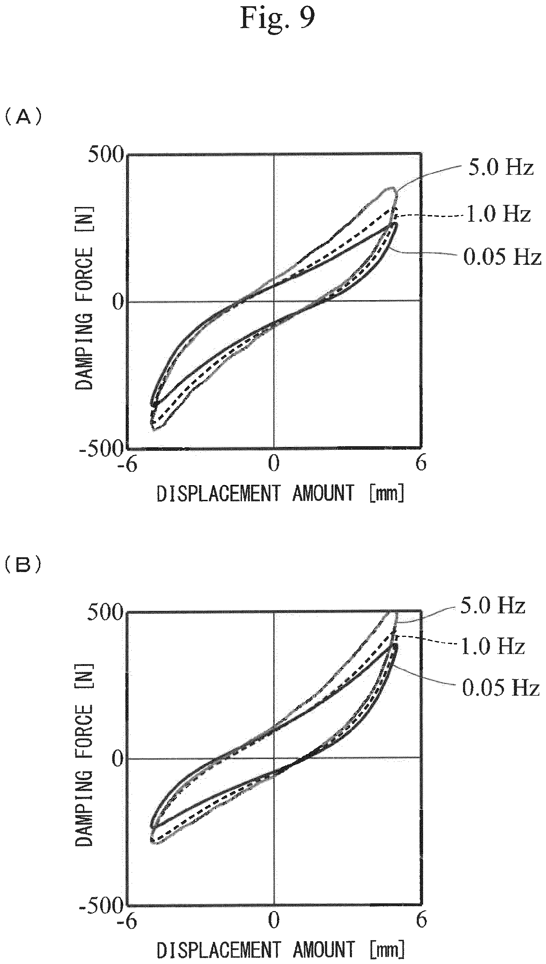

Fig. 9(A) shows a relationship between a stroke displacement amount and a damping force when the damper is vibrated at an amplitude of ±5 mm, an excitation frequency changed between 0.05 Hz, 1.0 Hz, and 5.0 Hz with the balancing center of the piston 130 serving as a center. On the other hand, Fig. 9 (B) shows a relationship between a stroke displacement amount and a damping force when the piston 130 is vibrated under the same conditions with the geometric center of the piston 130 serving as a center. A negative direction of the stroke displacement amount indicates a direction in which the piston 130 moves toward the second chamber C2 (in which the damper contracts), and a positive direction of the stroke displacement amount indicates a direction in which the piston 130 moves toward the first chamber C1 (in which the damper extends) (the same is applicable hereinafter).

As shown in Fig. 9(A), a damping force of the damper during extension and a damping force during contraction are substantially equivalent when the damper is vibrated with the balancing center serving as a center. More specifically, in this damper, the damping force during extension and the damping force during contraction can be almost equalized by making a filling rate of the granular bodies 190 in the first chamber C1 smaller than a filling rate of the granular bodies 190 in the second chamber C2 (the filling rate of the granular bodies 190 in first chamber C1: 66.8%, and the filling rate of granular bodies 190 of second chamber C2: 73.6%).

Furthermore, Figs. 10 (A), (B), (C) and (D) each show a relationship between a stroke displacement amount and a damping force when the damper is vibrated under the same condition while changing the filling rate of the granular bodies 190 in the first chamber C1 and the filling rate of the granular bodies 190 in the second chamber C2. In Fig. 10(A), the filling rate of the granular bodies 190 in the first chamber C1 is set to 60%, while the filling rate of the granular bodies 190 in the second chamber C2 is set to 80%. In Fig. 10(B), the filling rate of the granular bodies 190 in the first chamber C1 is set to 80%, while the filling rate of the granular bodies 190 in the second chamber C2 is set to 60%. In Fig. 10(C), the filling rate of the granular bodies 190 in the first chamber C1 is set to 66.8%, while the filling rate of the granular bodies 190 in the second chamber C2 is set to 73.6%. In Fig. 10(D), the filling rate of the granular bodies 190 in the first chamber C1 is set to 70%, while the filling rate of the granular bodies 190 in the second chamber C2 is set to 70%. In this way, the damping force of the damper can be adjusted by changing the filling rate of the granular bodies 190 in the first chamber C1 and the filling rate of the granular bodies 190 in the second chamber.

As described above, the damper according to the second embodiment includes the cylinder 110, the piston 130, the rod 150, the rod guide 170, and the plurality of granular bodies 190. The cylinder 110 is bottomed, and has the open end 111 at one end of the cylinder and the closed end 113 at the other end of the cylinder. The piston 130 divides the interior of the cylinder 110 into the first chamber C1 on the open end 111 side and the second chamber C2 on the closed end 113 side, and reciprocates in the central axis direction of the cylinder 110. The rod 150 is connected to the piston 130. The rod 150 extends in the central axis direction of the cylinder 110 and protrudes to the outside from the open end 111 side of the cylinder 110. The rod guide 170 is fixed to the open end 111. The rod guide 170 has a through hole 170A which penetrates in the central axis direction of the cylinder 110 and through which the rod 150 is reciprocably inserted. The granular bodies 190 are elastic bodies. The granular bodies 190 are filled in the first chamber C1 and the second chamber C2 at a predetermined filling rate.

At the time of extending and contracting operations of the damper, the granular bodies 190 filled in the first chamber C1 and the second chamber C2 are elastically deformed and crushed. By a frictional force between the granular bodies 190 and a frictional force between molecules of the granular bodies 190 generated at this time, the damper can exert a damping force.

Accordingly, the damper of the second embodiment can exert a damping force with a simple structure using the elastically deformable granular bodies 190.

In addition, when the granular bodies 190 filled in the first chamber C1 or the second chamber C2 are elastically deformed and crushed, elastic force of the granular bodies 190 acts on the piston 130. Accordingly, it is not necessary to provide a spring for generating a reaction force in the damper.

Furthermore, each of the granular bodies 190 has a spherical shape in this damper. When the granular bodies 190 are crushed by extending and contracting operations of the damper, a force is uniformly applied to each of the granular bodies 190. Accordingly, the void spaces in the first chamber C1 and in the second chamber C2 both filled with the granular bodies 190 are changed uniformly during extending and contracting operations, with the result that characteristics of the damper such as the damping force and the reaction force generated when the granular bodies 190 are crushed can be always substantially constant.

In addition, the granular bodies 190 are filled in the cylinder 110 in this damper instead of enclosing liquid such as silicone oil in the cylinder 110. Accordingly, the damper is free from leakage of liquid.

Furthermore, the filling rate of the granular bodies 190 in the first chamber C1 can be made smaller than the filling rate of the granular bodies 190 in the second chamber C2 in this damper. In this way, the damping force in a case where the piston 130 moves toward the first chamber C1 side so that the volume of the first chamber C1 is decreased (in a case where the damper extends) and the damping force in a case where the piston 130 moves toward the second chamber C2 side so that the volume of the second chamber C2 is decreased (in a case where the damper contracts) can be made substantially equivalent.

<Third Embodiment>

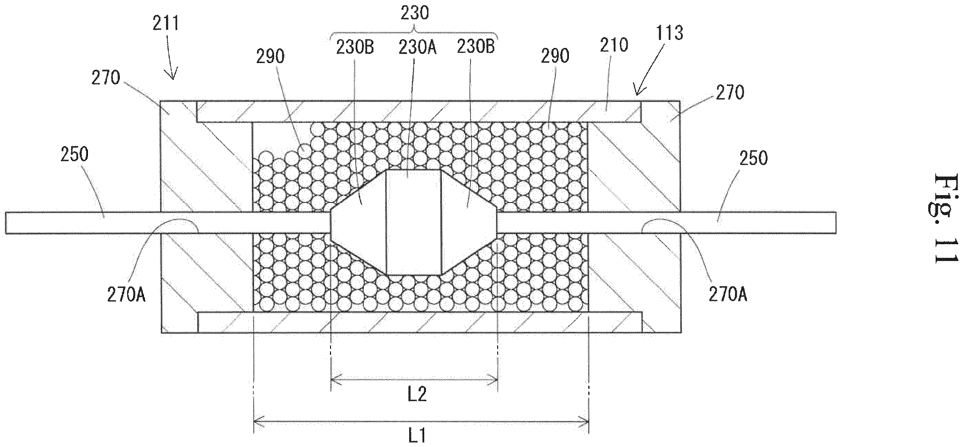

As shown in Fig. 11, a damper of the third embodiment includes a cylinder 210, a piston 230, rods 250, rod guides 270, and a plurality of granular bodies 290.

The cylinder 210 has a cylindrical shape having both opened end portions. The inner diameter of the cylinder 210 is 31 mm. The piston 230 has a central portion 230A and both end portions 230B. The central portion 230A has a columnar shape, and an outer diameter of 20 mm. That is, the central portion 230A is smaller than an inner diameter of the cylinder 210. Each of the end portions 230B has a truncated cone shape an outer diameter of which gradually decreases toward the outside with the end surface of the central portion 230A serving as a bottom surface. A clearance is formed between the piston 230 and an inner peripheral surface of the cylinder 210. A length L2 of the piston 230 in the central axis direction is 30 mm. The piston 230 reciprocates in the central axis direction of the cylinder 210.

Each of the rods 250 has a columnar shape with an outer diameter of 4 mm. The rods 250 are continuous with distal ends of both end portions 230B of the piston 230, and extend in both directions of the piston 230. The rods 250 extend in the central axis direction of the cylinder 210 and protrude to the outside from the open end 211 sides of both end portions of the cylinder 210. The rod guides 270 are respectively fixed to the open ends 211 at both end portions of the cylinder 210. Each of the rod guides 270 has a through hole 270A penetrating on the central axis thereof and having an inner diameter slightly larger than the outer diameter of the rod 250. In a state where the rod guides 270 are fixed to the open ends 211 of both end portions of the cylinder 210, the through hole 270A penetrates in the central axis direction of the cylinder 210. Each of the rods 250 is reciprocably inserted into the through hole 270A of each of the rod guides 270. In this damper, a distance L1 between inner side surfaces of the respective rod guides 270 inserted and fixed to the open ends 211 of both end portions of the cylinder 210 is 60 mm.

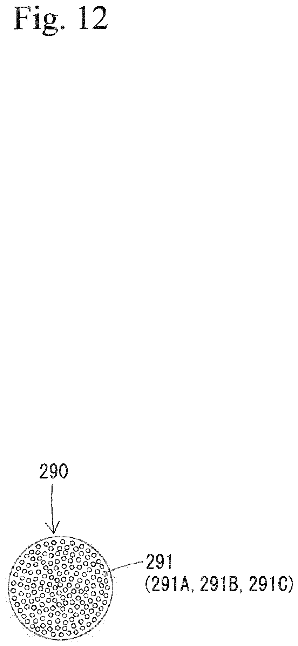

As shown in Fig. 12, each of the granular bodies 290 is an elastic body made of silicone rubber having a durometer type A hardness of 60°, and contains fine particles 291 in a sphere having a particle size of 3 mm. In this damper, when the piston 230 reciprocates in the central axis direction of the cylinder 210, the granular bodies 290 move through the clearance.

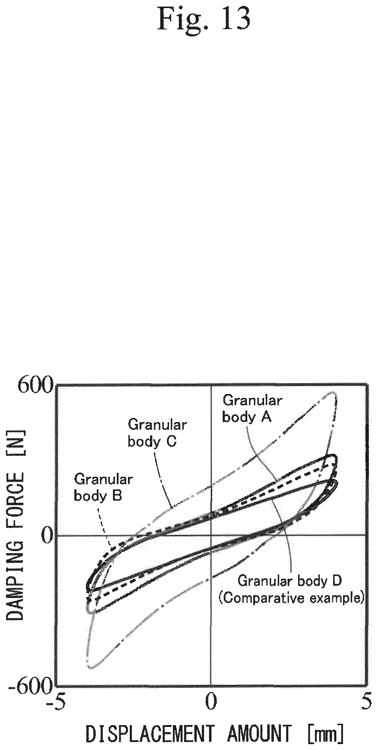

Fig. 13 shows a relationship between a stroke displacement amount and a damping force when four types of dampers, in each of which one of the following four types of the granular bodies 290 (spheres made of silicone rubber and each having a particle size of 3 mm) are filled in the cylinder 210 of the damper at a filling rate of 70%, are vibrated at an amplitude of $\pm 4$ mm and an excitation frequency of 3 Hz.

Granular body A: containing spherical fine particles 291A each having a particle size of 3 $\mu$m
Granular body B: containing spherical fine particles 291B each having a particle size of 6 $\mu$m
Granular body C: containing fine particles 291C each having a particle size of approximately 3 $\mu$m and having a spiky ball shape with recesses and protrusions on its surface
Granular body D: containing no fine particles 291 (comparative example)

The damping force of the damper filled with any of the granular bodies A to C containing the fine particles 291 is higher than the damping force of the damper filled with the granular bodies D not containing the fine particles 291. The damping force of the damper is higher as the particle size of the fine particles 291 contained in the granular body 290 is smaller. The damping force of the damper including the granular bodies 290 containing the fine particles 291 having a spiky ball shape is higher than the damping force of the damper including the granular bodies 290 containing the fine particles 291 having a spherical shape.

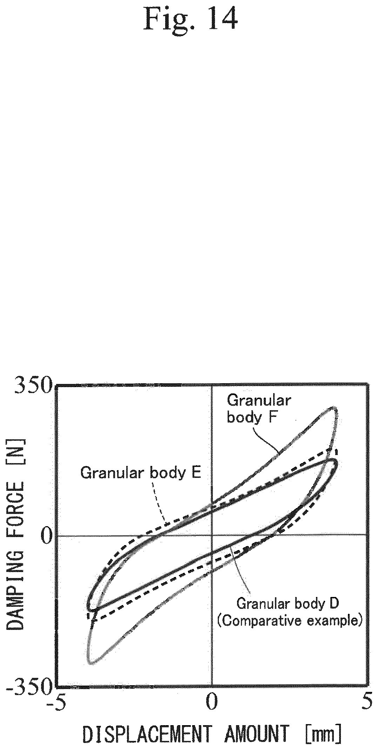

Next, Fig. 14 shows a relationship between a stroke displacement amount and a damping force when three types of dampers, in each of which one of the following three types of the granular bodies 290 (spheres made of silicone rubber and each having a particle size of 3 $\mu$m) are filled in the cylinder 210 of the damper at a filling rate of 70%, are vibrated at an amplitude of $\pm 4$ mm and an excitation frequency of 3 Hz.

Granular body D: containing no fine particles (comparative example)
Granular body E: containing the fine particles 291 at a volume ratio of 15 vol% to the granular body 290
Granular body F: containing the fine particles 291 at a volume ratio of 30 vol% to the granular body 290

The damping force of the damper is higher as the volume ratio of the fine particles 291 contained in the granular body 290 is higher. That is, the damping force of the damper is higher as hardness of the granular body 290 is higher.

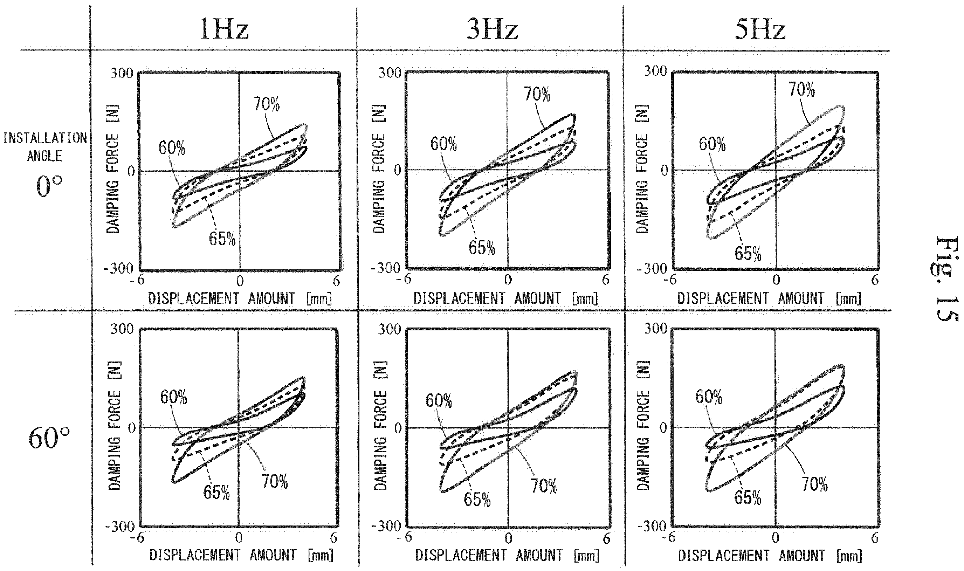

Fig. 15 shows a relationship between a stroke displacement amount and a damping force when three types of dampers in which the granular bodies 290 (particle size: 3 mm) made of silicone rubber not containing the fine particles 291 are filled in the cylinder 210 of the damper at filling rates of 60%, 65%, and 70%, are respectively installed at installation angles (inclination angles of center axes of cylinder 210 and rod 250 with respect to a horizontal line) of 0° and 60° and vibrated at ±4 mm and excitation frequencies of 1 Hz, 3 Hz, and 5 Hz. The damper with a filling rate of the granular bodies 290 in a range from 65% to 70% shows substantially no dependency on the installation angle.

As described above, the damper according to the third embodiment includes the cylinder 210, the piston 230, the rods 250, the rod guides 270, and the plurality of granular bodies 290. Both end portions of the cylinder 210 are opened. The piston 230 is housed in the cylinder 210 and reciprocates in the central axis direction of the cylinder 210. The rod 250 is connected to the piston 230. The rods 250 extend in the central axis direction of the cylinder 210 and protrude to the outside from the open end 211 sides of both end portions of the cylinder 210. The rod guides 270 are respectively fixed to both end portions of the cylinder 210. Each of the rod guides 270 has the through hole 270A which penetrates in the central axis direction of the cylinder 210 and through which the rod 250 is reciprocably inserted. The granular bodies 290 are elastic bodies. The granular bodies 290 are filled in the cylinder 210.

In this damper, when the piston 230 reciprocates in the central axis direction of the cylinder 210, the granular bodies 290 filled in the cylinder 210 are elastically deformed and crushed. By a frictional force between the granular bodies 290 and a frictional force between molecules of granular bodies 290 generated at this time, the damper can exert a damping force.

Accordingly, the damper of the third embodiment can exert a damping force with a simple structure using the elastically deformable granular bodies 290.

In addition, each of the granular bodies 290 has a spherical shape in this damper. When the piston 230 reciprocates in the central axis direction of the cylinder 210 and thereby the granular bodies 290 are crushed, a force is uniformly applied to each of the granular bodies 290. Accordingly, characteristics of the damper such as the damping force and the reaction force generated when the granular bodies 290 are crushed can be always substantially constant.

Furthermore, the granular bodies 290 are filled in the cylinder 210 in this damper instead of enclosing liquid such as silicone oil in the cylinder 210. Accordingly, the damper is free from leakage of liquid.

In addition, the granular bodies 290 of the damper contain the fine particles 291. According to this configuration, the frictional force between the granular bodies 290 are enhanced, with the result that the damping force of the damper can be increased.

Furthermore, a clearance is formed between the piston 230 and the inner peripheral surface of the cylinder 210 in the damper. When the piston 230 reciprocates in the central axis direction of the cylinder 210, the granular bodies 290 move through the clearance. Since the granular bodies 290 pass through the clearance in this damper, the granular bodies 290 are not confined in one space with respect to the piston 230 as the boundary, with the result that generation of a reaction force can be suppressed. Accordingly, the damper can satisfactorily exert a damping force.

The present invention is not limited to the first to third embodiments described above and depicted in the drawings. For example, following embodiments are also included in the technical scope of the present invention.

(1) Although the granular bodies are made of nitrile rubber or silicone rubber in the first to third embodiments, other materials may be adopted as long as the granular bodies are elastically deformable.
(2) Although the granular bodies filled in the cylinder have one type of particle size in the first to third embodiments, the granular bodies having a plurality of types of particle sizes may be filled in the cylinder.

Reference Signs List

10, 110,210 ... cylinder
11, 111,211 ... open end
13 ... closed end
30, 130, 230 ... piston
50, 150, 250 ... rod
70, 170, 270 ... rod guide
70A ... through hole
90, 190, 290 ... granular body
291 (291A, 291B, 291C) ... fine particle
C1 ... first chamber
C2 ... second chamber

**Claims**

1.  A damper comprising:

    a cylinder that has at least one open end;
    a piston housed in the cylinder and configured to reciprocate in a central axis direction of the cylinder;
    a rod connected to the piston, extending in the central axis direction of the cylinder, and protruding to an outside from the open end side of the cylinder;
    a rod guide fixed to the open end and having a through hole which penetrates in the central axis direction of the cylinder and through which the rod is reciprocably inserted; and
    a plurality of granular bodies that are elastic bodies each giving a spherical shape and filled in the cylinder.

2.  The damper according to claim 1, wherein each of the granular bodies contains fine particles.

3.  The damper according to claim 1, wherein:

    the cylinder is bottomed having an open end opened at one end of the cylinder and a closed end closed at the other end of the cylinder;
    the piston divides an interior of the cylinder into a first chamber on the open end side and a second chamber on the closed end side; and
    a filling rate of the granular bodies in the first chamber is smaller than a filling rate of the granular bodies in the second chamber.

4.  The damper according to claim 1, wherein:

    a clearance is formed between the piston and an inner peripheral surface of the cylinder; and
    when the piston reciprocates in the central axis direction of the cylinder, the granular bodies move through the clearance.

5.  The damper according to claim 2, wherein:

    the cylinder is bottomed having an open end opened at one end of the cylinder and a closed end closed at the other end of the cylinder;
    the piston divides an interior of the cylinder into a first chamber on the open end side and a second chamber on the closed end side; and
    a filling rate of the granular bodies in the first chamber is smaller than a filling rate of the granular bodies in the second chamber.

6.  The damper according to claim 2, wherein:

    a clearance is formed between the piston and an inner peripheral surface of the cylinder; and
    when the piston reciprocates in the central axis direction of the cylinder, the granular bodies move through the clearance.

# Fig. 1

# Fig. 2

Filling rate 88%

Filling rate 85%

Filling rate 82%

Filling rate 75%

Comparative example

Filling rate 70%

Filling rate 65%

Filling rate 60%

REACTION FORCE [N]

5000

4000

3000

2000

1000

0

DISPLACEMENT AMOUNT [mm]

0 1 2 3 4 5 6 7 8

# Fig. 3

# Fig. 4

# Fig. 5

# Fig. 6

# Fig. 7

# Fig. 8

# Fig. 9

（A）

（B）

Fig. 10

# Fig. 11

Fig. 12

290

291
(291A, 291B, 291C)

# Fig. 13

# Fig. 14

# Fig. 15

## INTERNATIONAL SEARCH REPORT

| International application No. |
|---|
| PCT/JP2017/007686 |

| A. CLASSIFICATION OF SUBJECT MATTER |
|---|
| *F16F9/30*(2006.01)i, *F16F7/01*(2006.01)i |

According to International Patent Classification (IPC) or to both national classification and IPC

| B. FIELDS SEARCHED |
|---|

Minimum documentation searched (classification system followed by classification symbols)
F16F9/30, F16F7/01

Documentation searched other than minimum documentation to the extent that such documents are included in the fields searched
Jitsuyo Shinan Koho          1922-1996    Jitsuyo Shinan Toroku Koho    1996-2017
Kokai Jitsuyo Shinan Koho    1971-2017    Toroku Jitsuyo Shinan Koho    1994-2017

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | CD-ROM of the specification and drawings annexed to the request of Japanese Utility Model Application No. 101131/1991(Laid-open No. 50192/1993)<br>(Koganei Corp.),<br>02 July 1993 (02.07.1993),<br>paragraphs [0015] to [0035]; fig. 1 to 4<br>(Family: none) | 1<br>2-6 |
| Y | JP 2011-149476 A (Bridgestone Corp.),<br>04 August 2011 (04.08.2011),<br>paragraphs [0027] to [0037]; fig. 1 to 2<br>(Family: none) | 2,5-6 |

| ☒ Further documents are listed in the continuation of Box C. | ☐ See patent family annex. |
|---|---|

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 27 March 2017 (27.03.17) | 04 April 2017 (04.04.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
|---|
| PCT/JP2017/007686 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-20548 A (Toyo Tire and Rubber Co., Ltd.), 23 January 2002 (23.01.2002), paragraphs [0008] to [0012]; fig. 1 (Family: none) | 2,5-6 |
| Y | CN 104632990 A (PEOPLE'S LIBERATION ARMY ORDNANCE ENGINEERING COLLEGE), 20 May 2015 (20.05.2015), paragraphs [0012] to [0014]; fig. 1 (Family: none) | 3,5 |
| Y | JP 2011-21648 A (Nagoya Institute of Technology), 03 February 2011 (03.02.2011), paragraphs [0014] to [0020]; fig. 1 to 2 (Family: none) | 4,6 |
| A | JP 51-31377 A (The Yokohama Rubber Co., Ltd.), 17 March 1976 (17.03.1976), page 4, upper left column, line 10 to page 5, upper left column, line 16; fig. 1 to 3 (Family: none) | 1-6 |
| A | Microfilm of the specification and drawings annexed to the request of Japanese Utility Model Application No. 155720/1986(Laid-open No. 59340/1987) (Sanwa Tekki Corp.), 13 April 1987 (13.04.1987), specification, page 3, line 4 to page 5, line 12; fig. 1 to 3 (Family: none) | 1-6 |
| A | GB 2473452 A (COURTNEY, William Alexander), 16 March 2011 (16.03.2011), entire text; fig. 1 to 27 (Family: none) | 1-6 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011021648 A